# EUROPEAN PATENT SPECIFICATION

(11) **EP 0 921 972 B1**
(45) Date of publication and mention of the grant of the patent: **17.07.2002**
(21) Application number: 97936915.4
(22) Date of filing: 28.08.1997
(51) Int. Cl.: B62D 21/02, B62D 21/18, B62D 65/00

(54) **VEHICLE FRAME AND METHOD OF ASSEMBLING IT**
FAHRZEUGRAHMEN UND HERSTELLUNGSVERFAHREN
CHASSIS DE VEHICULE ET PROCEDE D'ASSEMBLAGE ASSOCIE

(30) Priority: 30.08.1996 SE 9603145
(43) Date of publication of application: 16.06.1999
(73) Proprietor: Scania CV Aktiebolag (publ), 151 87 Södertälje (SE)
(72) Inventor: BOREHALL, Hans, S-641 47 Katrineholm (SE); EKLUND, Hans, S-641 51 Katrineholm (SE); JUNG, Lars, S-641 36 Katrineholm (SE)
(74) Representative: Waldebäck, Hans Olov
(86) International application number: SE9701429
(87) International publication number: WO9808722

(56) References cited:
- WO-A-90/04534
- DE-A- 3 912 484
- DE-C- 351 056
- FR-A- 2 200 818
- US-A- 5 205 587

## Description

### Area of technology

The present invention relates partly to a vehicle frame, in accordance with the preamble to patent claim 1, and partly to a method of assembling it, in accordance with the preamble to patent claim 4.

### State of the art

A common practice in large vehicle frames, particularly for buses, is to use special side members for each vehicle length. This complicates manufacture and stockholding but facilitates assembly. A vehicle frame corresponding to the preamble of claim 1 and 4 is shown in FR 2 200 818 and comprises two side members having running through them cross-members which as testened to both side members.

### Object of the invention

The object of the invention is to create a vehicle frame which is rational to manufacture and allows great flexibility with regard to design, specially length.

### Brief description of the invention

This object is achieved by the features which are set out in the characterising parts of patent claims 1 and 4. By using side members which allows the cross member to be placed in alternative positions relative to the side members and by using side members which after assembly can be cut to a desired length results in substantial simplification of their manufacture and stockholding.

Further features and advantages of the invention are indicated in the description below.

### List of drawings

Fig. 1 shows a perspective view of a vehicle frame according to the invention and
Fig. 2 shows a vehicle frame after cutting of the side members.

### Description of preferred embodiments

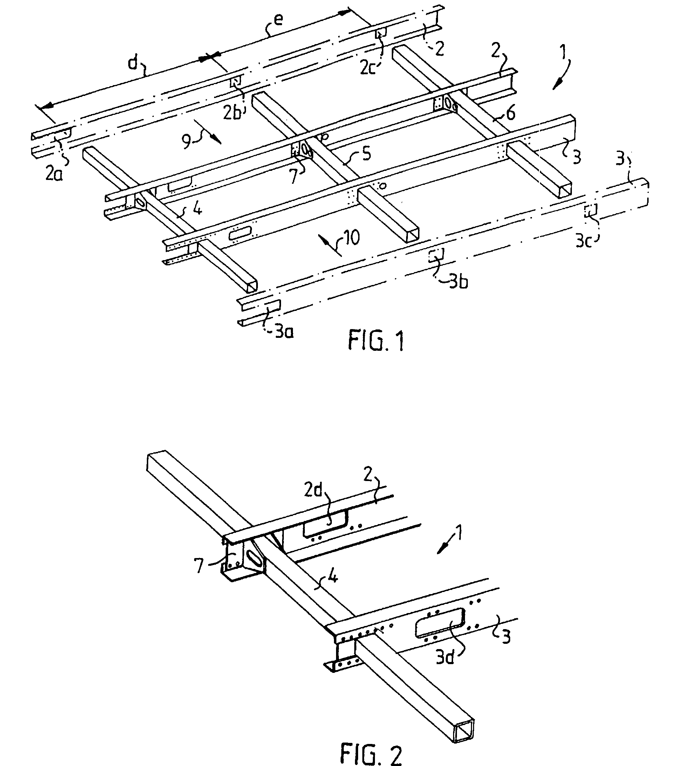

As may be seen in Fig. 1, a vehicle frame 1 according to the invention is composed of two elongated side members 2 and 3 and three shorter cross-members 4, 5 and 6. The side members 2 and 3 are at certain mutual spacing and run in the longitudinal direction of the vehicle. The cross-members are arranged at right angles to the side members, through which they run and to which they are joined so that a rigid vehicle frame 1 is formed. To this end the side member 2 is provided with apertures 2a, 2b and 2c and the side member 3 is correspondingly provided with apertures 3a, 3b and 3c. These apertures are large enough for it to be possible to run the cross-members through them with clearance. On each of the cross-members there are fastening devices 7, here in the form of flanges, for joining side members and cross-members together by means of fastening elements in the form of bolts and nuts.

The cross-members to be used in the vehicle frame are provided beforehand with fastening devices 7, advantageously by welding, which fastening devices are with advantage arranged in pairs and situated along the cross-members in such a way as to achieve the intended spacing between the side members at the time of assembly.

The side members to be used in the vehicle frame 1 are provided beforehand with the requisite number of apertures for cross-members and with the requisite number of holes for fastening elements. In this respect it is desirable from the outset to design the side members so that the same side member design can be used for different frame variants. This means that, for example, there may be alternative apertures for cross-members and hence also alternative holes for the fastening elements 8 depending on what is necessary or desired.

The procedure of assembling the vehicle frame 1 according to the invention starts with fixing the requisite number of cross-members (provided with necessary fastening devices 7) at the intended mutual spacings *d, e* and in the intended positions relative to one another. This is followed by placing the side members 2 and 3 in position by moving them in the transverse directions marked by the arrows 9 and 10 so that they abut against the fastening devices 7 and reach their intended positions on the cross-members. The next stage is to secure the fastening devices 7 and hence the cross-members to the side members by inserting bolts through the holes provided for the purpose. During this assembly operation it is important that the cross-members are inserted through the apertures intended for them in the side members with clearance in order to avoid damage to the surface treatment, which is with advantage applied to the relevant parts before the assembly operation. This makes it possible, for example, for these parts to be spray-painted and keep their paintwork intact during the assembly operation, not least because welding to the side members is obviated.

The vehicle frame 1 here depicted is intended, together with its long cross-members, to form part of a bus. Depending on the length of the bus, it may be desirable to connect two vehicle frames 1 of the type depicted by joining the side members together at suitable points in the vehicle. It is also possible to use two separate vehicle frames with a self-supporting vehicle body portion between them. The shape of the side members may of course be different from that here depicted. Depending on the design of the vehicle, they may for example be bent in various ways. Other types of sections may be used instead of channel sections.

The cross-members 4, 5 and 6 are depicted here with closed cross-sections, resulting in good rigidity, but other versions may also be desired. Assembling the vehicle frame is facilitated if the portions of the cross-members 4, 5 and 6 which protrude beyond the side members 2, 3 are straight.

The type of fastening devices 7 and fastening elements may also be varied as necessary or desired. Where applicable, certain cross-members may be provided with a larger or smaller number of fastening devices than other cross-members, depending on their location in the vehicle.

Further parts not here depicted are subsequently fitted in a conventional manner to the vehicle frame here depicted.

It is rational from the manufacturing point of view to be able to use similar side members for different frame lengths, thereby obviating production adjustments and simplifying stockholding.

According to the invention it is proposed, as indicated in Fig. 1, that the vehicle frame 1 is assembled with side members 2 and 3 of a standard type and with cross-members 4, 5 and 6 in their intended positions. In cases where the completed frame is to have shorter than standard side members, cutting is carried out according to Fig. 2 of the overhang forward of the front cross-member 4 to the desired extent after assembly. The cutting may, for example, be made more extensive if the cross-member 4 is positioned still further rearwards, e.g. in the apertures 2d and 3d depicted in Fig. 2.

Alternative positionings of the front cross-member 4 are facilitated by the forward aperture 3a in the side member 3 being elongated in the latter's longitudinal direction and by there being at the same time a sufficient number of ready-made apertures for threaded connections. The aperture 3a may, as here, take the form of a slot which runs from a side member end and is itself open at one end.

## Claims

1. Vehicle frame, particularly a bus frame, provided with two side members (2,3) which run in the longitudinal direction of the vehicle, are arranged at a certain mutual spacing and have running through them cross-members (4,5,6) which are arranged at intended mutual spacings in the longitudinal direction of the vehicle and are each fastened to both of the side members, **characterised in that** the side members (2, 3) each have one end designed for alternative longitudinal positionings of a cross-member (4) situated there and incorporate at least a first cross-member aperture (2a,3a) which is elongated in the longitudinal direction of the side member, adjacent to which cross-member apertures there are apertures whereby threaded connections for joining side members to fastening devices (7) on the cross-member can be placed in alternative positions, and that each side member is cut as necessary outside said cross member (4) in order to give the frame its intended length after assembly.

2. Vehicle frame according to claim 1, **characterised in that**
the first cross-member aperture (2a,3a) extends in the side member (2,3) in the form of a slot which runs from one end of the side member and which is itself open at one end.

3. Vehicle frame according to claim 2, **characterised in that** a second cross-member aperture (2d,3d) is also elongated in the longitudinal direction of the side member and is situated slightly inward from the first cross-member aperture (2a,3a) but before the aperture (2b,3b) for the next cross-member (5).

4. Method of assembling a vehicle frame, particularly a bus frame, whereby the vehicle frame incorporates not only two side members (2,3) which run in the longitudinal direction of the beam and are intended to be at a certain mutual spacing, but also cross-members (4,5,6) which are situated at mutual spacings in the longitudinal direction of the vehicle, are introduced into apertures (2a,2b,2c,3a,3b,3c) in the side members and are thereafter fastened to the latter, **characterised in that** a single side-member length is used for different frame lengths, the cross-member (4) situated closest to one end (the forward end) of the frame (1) is fitted in prepared apertures in the side members in one of several alternative longitudinal positions relative to the side members which position corresponds to the intended frame length, and said cross-member (4) is fastened to the side members (2,3), after which the latter are cut as necessary outside said cross-members (4) in order to give the frame (1) the intended length.

5. Method according to claim 4, **characterised in that** the cross-members (4,5,6) are fastened to the side members (2,3) by threaded connections.

## Patentansprüche

1. Fahrzeugrahmen, insbesondere Omnibusrahmen, mit zwei Seitenteilen (2, 3), die sich in der Längsrichtung des Fahrzeugs erstrecken, in einem bestimmten gegenseitigen Abstand angeordnet und von Querteilen (4, 5, 6) durchdrungen sind, welche in vorgesehenen gegenseitigen Abständen in der Längsrichtung des Fahrzeugs angeordnet sind und von denen jedes an beiden Seitenteilen befestigt ist, **dadurch gekennzeichnet, dass** die Seitenteile (2, 3) an je einem Ende für eine in Längsrichtung wählbare Positionierung eines dort angeordneten Querteils (4) ausgebildet sind und mindestens eine erste Querteilöffnung (2a, 3a) aufweisen, die in der Längsrichtung des Seitenteils langgestreckt ist, wobei angrenzend an diese Querteilöffnungen Öffnungen vorgesehen sind, durch die Gewindeverbindungen zum Verbinden von Seitenteilen mit Befestigungsvorrichtungen (7) in wählbaren Stellungen an dem Querteil anzuordnen sind, und dass jedes Seitenteil nötigenfalls außerhalb des Querteils (4) abgeschnitten ist, um dem Rahmen nach dessen Zusammenbau die nötige Länge zu geben.

2. Fahrzeugrahmen nach Anspruch 1, **dadurch gekennzeichnet, dass** die erste Querteilöffnung (2a, 3a) sich im Seitenteil (2, 3) in Form eines Schlitzes erstreckt, der von einem Ende des Seitenteils ausgeht und selber an einem Ende offen ist.

3. Fahrzeugrahmen nach Anspruch 2, **dadurch gekennzeichnet, dass** eine zweite Querteilöffnung (2d, 3d) ebenfalls in der Längsrichtung des Seitenteils langgestreckt ist und geringfügig innerhalb der ersten Querteilöffnung (2a, 3a) angeordnet ist, jedoch vor der Öffnung (2b, 3b) für das nächste Querteil (5).

4. Verfahren zum Zusammenbauen eines Fahrzeugrahmens, insbesondere eines Omnibusrahmens, wobei der Fahrzeugrahmen nicht nur zwei Seitenteile (2, 3) aufweist, die in der Längsrichtung des Rahmens verlaufen und dazu vorgesehen sind, einen bestimmten Abstand voneinander einzunehmen, sondern auch Querteile (4, 5, 6), die in gegenseitigen Abständen in Längsrichtung des Fahrzeugs angeordnet werden, in Öffnungen (2a, 2b, 2c, 3a, 3b, 3c,) in den Seitenteilen eingeführt werden und danach an diesen befestigt werden, **dadurch gekennzeichnet, dass** eine einzige Seitenteillänge für verschiedene Rahmenlängen verwendet wird, wobei das einem Ende (dem vorderen Ende) des Rahmens (2) am nächsten angeordnete Querteil (4) in vorbereitete Öffnungen in den Seitenteilen in einer von mehreren wählbaren Längsstellungen bezüglich der Seitenteile eingefügt wird, welche Stellung der beabsichtigten Rahmenlänge entspricht, und das genannte Querteil (4) an den Seitenteilen (2, 3) befestigt wird, woraufhin die letzteren nötigenfalls außerhalb der genannten Querteile (4) abgeschnitten werden, um dem Rahmen (1) die beabsichtigte Länge zu geben.

5. Verfahren nach Anspruch 4, **dadurch gekennzeichnet, dass** die Querteile (4, 5, 6) an den Seitenteilen (2, 3) durch Gewindeverbindungen befestigt werden.

## Revendications

1. Châssis de véhicule, particulièrement châssis de bus, muni de deux éléments latéraux (2, 3) qui s'étendent dans la direction longitudinale du véhicule, sont agencés à un certain espacement mutuel et ont des éléments transversaux s'étendant à travers ceux-ci (4, 5, 6) qui sont agencés au niveau d'espacements mutuels prévus dans la direction longitudinale du véhicule, et qui sont fixés chacun sur les deux éléments latéraux, **caractérisé en ce que** les éléments latéraux (2, 3) ont chacun une première extrémité conçue pour des positionnements longitudinaux en alternance d'un élément transversal (4) situé ici, et comportent au moins une première ouverture d'élément transversal (2a, 3a) qui est allongée dans la direction longitudinale de l'élément latéral, ouvertures d'élément transversal auxquelles sont adjacentes des ouvertures, de sorte que des connexions filetées pour relier les éléments latéraux à des dispositifs de fixation (7) situés sur l'élément transversal peuvent être positionnées clans des positions en variante, et **en ce que** chaque élément latéral est coupé, autant que nécessaire, à l'extérieur de l'élément transversal (4) afin de donner au châssis la longueur prédéterminée après assemblage.

2. Châssis de véhicule selon la revendication 1, **caractérisé en ce que**
la première ouverture d'élément transversal (2a, 3a) s'étend dans l'élément latéral (2, 3) sous la forme d'une fente qui s'étend à partir d'une première extrémité de l'élément latéral, et qui est elle-même ouverte au niveau d'une première extrémité.

3. Châssis de véhicule selon la revendication 2, **caractérisé en ce qu'**une seconde ouverture d'élément transversal (2d, 3d) est également allongée dans la direction longitudinale de l'élément latéral, et située légèrement vers l'intérieur à partir de la première ouverture d'élément transversal (2a, 3a), mais avant l'ouverture (2b, 3b) de l'élément transversal suivant (5).

4. Procédé d'assemblage d'un châssis de véhicule, particulièrement un châssis de bus, le châssis de véhicule comportant non seulement deux éléments latéraux (2, 3) qui s'étendent dans la direction longitudinale du véhicule, et qui sont prévus pour être à un certain espacement mutuel, mais également des éléments transversaux (4, 5, 6) qui sont situés au niveau d'espacements mutuels dans la direction longitudinale du véhicule, sont introduits dans des ouvertures (2a, 2b, 2c, 3a, 3b, 3c) situées dans les éléments latéraux, et sont par la suite fixés sur ces derniers, **caractérisé en ce qu'**on utilise une longueur d'élément latéral unique pour différentes longueurs de châssis, l'élément transversal (4) situé le plus proche d'une première extrémité (l'extrémité avant) du châssis (1) est agencé dans des ouvertures préparées situées dans les éléments latéraux dans une de plusieurs positions longitudinales en variante par rapport aux éléments latéraux, position qui correspond à la longueur de châssis prévue, et ledit élément transversal (4) est fixé sur les éléments latéraux (2, 3), après quoi ces derniers sont découpés si nécessaire à l'extérieur desdits éléments transversaux (4) pour donner au châssis (1) la longueur prévue.

5. Procédé selon la revendication 4, **caractérisé en ce que** les éléments transversaux (4, 5, 6) sont fixés sur les éléments latéraux (2, 3) par l'intermédiaire de connexions filetées.
